# DEMANDE DE BREVET EUROPEEN

(11) **EP 1 483 972 A1**
(43) Date de publication de la demande: **08.12.2004**
(21) Numéro de dépôt: 03447167.2
(22) Date de dépôt: 20.06.2003
(51) Int. Cl.: A23B 7/152, A23B 7/015, B01J 35/02

(54) **Procédé et dispositif pour la préservation de produits agricoles**

(30) Priorité: 02.06.2003 EP 03447137
(71) Demandeur: Université Catholique de Louvain, 1348 Louvain-La-Neuve (BE)
(72) Inventeur: Kartheuser, Benoît, B-5590 Ciney (BE); May, Bronislav Henri, B-3090 Overijse (BE)
(74) Mandataire: Bird, William Edward

(57) **Abrégé**

L'invention concerne un procédé de préservation de la qualité de produits agricoles, tels que fruits, légumes, fleurs et plantes, dans l'atmosphère gazeuse d'une enceinte close, consistant à soumettre ladite atmosphère gazeuse à un processus d'oxydation photocatalytique selon un régime turbulent d'écoulement, ledit régime est de préférence défini par un indice de turbulence au moins égal à 2.000. Le procédé permet d'éliminer rapidement l'éthylène formé par la maturation ou le développement des produits agricoles, même lorsque la concentration initiale d'éthylène dans l'enceinte close est très faible.

## Description

La présente invention se rapporte à un procédé de préservation de la qualité de produits agricoles, en particulier un procédé de contrôle du murissement de fruits et légumes ou du développement de fleurs et plantes dans l'atmosphère gazeuse d'une enceinte close, par exemple pendant une phase de stockage ou transport après leur récolte, ou bien pendant une phase de mûrissement délibéré immédiatement avant la consommation. L'invention se rapporte en outre à un dispositif pour la mise en oeuvre de ce procédé.

### ETAT DE LA TECHNIQUE

Il existe un besoin pressant et universel pour préserver la qualité de produits agricoles tels que fruits, légumes, fleurs et plantes, en particulier pour contrôler le murissement de fruits et légumes, à différentes phases de temps entre leur récolte et leur consommation, notamment pendant la phase de stockage à proximité du lieu de leur récolte, pendant la phase de transport du lieu de récolte au lieu de mise en vente au consommateur final et pendant la phase de stockage à proximité du lieu de mise en vente au consommateur final. En effet, un mûrissement incontrôlé est fortement susceptible, pour la plupart des produits agricoles, d'entraîner la détérioration partielle ou totale d'au moins une partie de la récolte en la rendant impropre au respect des critères de choix du distributeur final ou du consommateur final, ou au maintien des prix de vente, et de conduire par voie de conséquence à des pertes économiques importantes. Il existe aussi un besoin pressant pour diminuer la consommation d'énergie pendant le transport ou stockage frigorifique de produits agricoles entre le lieu de récolte et le lieu de mise en vente au consommateur final, par exemple en limitant la baisse de température, par rapport à la température extérieure, procurée par les moyens de réfrigération pendant le transport ou stockage. Il existe aussi un besoin pressant pour maintenir ou contrôler, pendant le transport ou stockage de fruits et légumes entre le lieu de récolte et le lieu de mise en vente au consommateur final, les propriétés organoleptiques de ces fruits et légumes, notamment de maintenir ou contrôler leur taux en sucres. Enfin il existe aussi un besoin pour retarder la maturation des fruits de façon à pouvoir allonger la période de disponibilité à la vente de certaines espèces ou à pouvoir maintenir des prix plus rémunérateurs dans une période où l'espèce considérée est faiblement présente sur le marché. Le même besoin existe pour retarder le développement des fleurs, de manière à pouvoir par exemple allonger leur durée de transport et donc assurer leur distribution sur des zones plus étendues.

Le rôle de l'éthylène comme hormone de maturation est bien connu et décrit dans la littérature, à des niveaux de l'ordre de quelques parties par million (par abréviation, ppm) dans l'air, pour des produits tels que les tomates, les poires, les pommes, les bananes, les avocats, les raisins, les fraises, les noix, etc. Ce même rôle est également connu pour les fleurs et plantes. L'éthylène est produit par des mécanismes biochimiques bien connus dans les fruits en stade de mûrissement, le phénomène étant auto-accélérateur et tendant à être accentué par le stockage à froid. Le pouvoir émissif en éthylène et la sensibilité de chaque type de fruit ou légume sont extrêmement variables d'une espèce à l'autre. Le stockage de produits différents ou même de niveau de maturation variables au sein d'une même espèce est en général évité.

Plusieurs techniques ont été utilisées pour contrôler le vieillissement de fruits et légumes, comme la conservation en enceinte réfrigérée et/ou la réduction de la concentration en oxygène dans l'atmosphère de stockage afin de modérer la respiration des fruits et légumes. Le contrôle de l'éthylène a aussi été tenté avec des système absorbants à base de charbon activé. Malheureusement, les qualités absorbantes du charbon activé sont relativement limitées pour l'éthylène et on atteint en général par ce moyen des concentrations résiduelles en éthylène qui sont encore trop élevées dans la plupart des cas. Il a aussi été tenté de suppléer à cette déficience en ayant recours à des systèmes de filtrage imprégnés de matières oxydantes chimiquement actives telles que le permanganate de potassium. Cette dernière technique présente de nombreux inconvénients : le système de filtrage comporte des éléments tels que sacs ou cylindres qui doivent être remplacés au moins tous les 30 jours ; le permanganate de potassium est oxydé pendant la réaction chimique ce qui implique aussi de le remplacer périodiquement ; enfin la manipulation des sacs de permanganate est très salissante parce qu'elle implique des particules de faibles dimensions d'une matière de couleur violette très tenace.

D'autres procédés de préservation des fruits et légumes font appel à des réactifs chimiques appliqués directement sur ces produits pour inhiber les récepteurs biologiques conduisant à la maturation des fruits et légumes. D'autres techniques encore impliquent l'application de systèmes catalytiques traditionnels requérant des températures de l'ordre de 200°C à 250°C environ. Cette pratique est particulièrement désavantageuse dans des chambres réfrigérées contenant une atmosphère à composition contrôlée, puisque l'air de ces enceintes doit être recyclé pour des raisons d'économie évidentes, impliquant ainsi la nécessité d'échauffer l'air à 200 °C environ puis de le refroidir à la température ordinaire après chaque passage devant le catalyseur, ce qui représente un coût énergétique significatif.

Quelques publications décrivent l'application du principe de photocatalyse à la préservation des fruits et légumes. Ainsi, la publication de brevet japonais 7-88367 décrit un photocatalyseur comprenant un support sur lequel est déposée une couche de fines particules de dioxyde de titane ayant un diamètre de particule cristalline de 100 à 500 angstrôms ; en plaçant ce catalyseur dans une enceinte contenant 100 ppm d'éthylène sous irradiation ultraviolette pendant 50 minutes, la teneur en éthylène est abaissée à 3,9 ppm. Le brevet US-A-6.358.374 décrit l'interaction synergistique entre deux technologies d'élimination de contaminants gazeux, en utilisant l'adsorption du contaminant et l'oxydation photocatalytique. A partir de la figure 5 de ce document, il est tout à fait clair que l'éthylene est le contaminant le plus difficile à oxyder : la figure ne montre pas de concentrations d'éthylene inférieures à environ 7 ppm et, en supposant dépendance la linéaire de la vitesse d'oxydation en fonction de la concentration, l'extrapolation de la courbe de l'éthylene à partir de la figure 5 montre que la vitesse d'oxydation devient insignificante à des concentrations d'éthylene en dessous de 1 ppm. L'un et l'autre de ces deux brevets démontrent donc que le traitement photocatalytique n'a pas encore atteint le niveau d'efficacité nécessaire pour maintenir la concentration d'éthylène d'une atmosphère gazeuse suffisamment basse pour garantir un niveau élevé et durable de préservation des produits agricoles.

Les buts de la présente invention consistent à résoudre les divers problèmes techniques précités, en particulier en liaison avec l'éthylène, à savoir la préservation de la qualité des produits agricoles ; la diminution de consommation d'énergie pendant le transport ou stockage frigorifique de produits agricoles ; le maintien ou contrôle, pendant le transport ou stockage de fruits et légumes entre le lieu de récolte et le lieu de mise en vente au consommateur final, de leurs propriétés organoleptiques ; le retard de maturation des fruits ou de développement des fleurs.

### RESUME DE L'INVENTION

La présente invention est basée sur la découverte surprenante que la résolution des problèmes techniques précités peut être obtenue en proposant une méthode utilisant les principes de la photocatalyse mais dont l'efficacité, mesurée en termes de concentration résiduelle en éthylène dans l'atmosphère gazeuse contenant les produits agricoles à préserver, est très supérieure à celle accessible selon les enseignements de l'art antérieur.

L'invention consiste en un procédé de préservation de la qualité de produits agricoles dans l'atmosphère gazeuse d'une enceinte close, comprenant un traitement consistant à soumettre ladite atmosphère gazeuse à un processus d'oxydation photocatalytique selon un régime turbulent d'écoulement, de préférence défini par un indice de turbulence au moins égal à 2.000. La mise en oeuvre de l'invention permet de dégrader l'éthylène, dans une enceinte dont la teneur en éthylène est déjà relativement faible (10 à 300 ppm environ), jusqu'au point où la concentration d'éthylène ne dépasse pas 1 ppm, de préférence pas 0,5 ppm. Il a été découvert qu'outre des avantages économiques substantiels ce processus permet d'améliorer sensiblement les qualités et propriétés organoleptiques des fruits et légumes ainsi traités, en particulier de contrôler leur taux en sucres, par comparaison aux méthodes de préservation et de stockage plus traditionnelles décrites ci dessus.

### BREVE DESCRIPTION DES DESSINS

La figure 1 représente schématiquement un réacteur photo-catalytique pour la mise en oeuvre du procédé selon l'invention.

La figure 2 représente un dispositif, installé sur un véhicule de transport, pour la mise en oeuvre du procédé selon l'invention.

La figure 3 représente la courbe d'évolution, en fonction du temps, de la concentration en éthylène dans une enceinte remplie de fruits avant et après la mise en oeuvre du procédé selon l'invention.

### DESCRIPTION DETAILLEE DE L'INVENTION

Dans le procédé selon l'invention, il est essentiel que l'atmosphère gazeuse dans laquelle sont disposés les produits agricoles à préserver soit soumise à un processus d'oxydation photocatalytique selon un régime turbulent d'écoulement. Ladite atmosphère gazeuse contient habituellement un ou plusieurs composants gazeux, ci-après désignés contaminants, accélérant la dégradation des produits agricoles, par exemple le mûrissement des fruits et légumes ou le développement des fleurs et plantes, et la (les) teneur(s) en ce(s) contaminant(s) dans l'atmosphère gazeuse est (sont) réduites par l'effet de l'oxydation photocatalytique sous régime turbulent. Ces contaminants sont habituellement d'origine biologique mais peuvent aussi avoir été introduits dans l'enceinte close contenant les produits agricoles par inadvertance, par exemple par la fumée de cigarette d'un manipulateur de l'entreprise de stockage ou de transport. De préférence, l'un des contaminants est l'éthylène produit biologiquement par lesdits produits agricoles, et sa teneur est réduite jusqu'à moins de 1 ppm, de préférence moins de 0,5 ppm, plus préférentiellement moins de 0,1 ppm, par l'effet de l'oxydation photocatalytique sous régime turbulent.

Selon un mode de réalisation de l'invention, l'atmosphère gazeuse est forcée, en présence d'au moins une source de rayonnement ultraviolet ou visible, à passer selon un régime turbulent d'écoulement au contact d'un catalyseur capable d'oxyder un ou plusieurs contaminants contenus dans l'atmosphère gazeuse sous l'action dudit rayonnement ultraviolet ou visible. Dans ce cas, ledit catalyseur est de préférence déposé sur un support placé dans ladite enceinte close. Ledit support peut constituer un moyen d'obstruction contribuant à générer le régime turbulent d'écoulement pour l'atmosphère gazeuse. Le support peut aussi être fonctionnellement associé à, ou bien être inclus dans un dispositif comprenant ou bien fonctionnellement associé à, des moyens propres à amplifier un écoulement turbulent de l'atmosphère gazeuse.

Selon un autre mode de réalisation de l'invention, l'atmosphère gazeuse est forcée à passer au contact d'au moins un moyen d'obstruction placé dans l'enceinte close et contribuant à générer le régime turbulent d'écoulement pour ladite atmosphère gazeuse.

Ainsi le procédé selon l'invention est de préférence mis en oeuvre par l'emploi d'un dispositif réactionnel de photocatalyse, ci-après aussi désigné par le terme " réacteur ". Un paramètre important de l'efficacité du procédé réside dans l'agencement intérieur du dispositif réactionnel, par exemple dans la disposition des éléments de support de catalyseur par rapport à la direction d'écoulement du gaz, et plus particulièrement dans le fait que ces éléments de support de catalyseur, le cas échéant associés à d'autres moyens d'obstruction de l'écoulement gazeux et/ou à des moyens supplémentaires de génération de turbulence, sont disposés de manière à assurer un écoulement turbulent, en tout point de la surface catalytique exposée, de l'atmosphère gazeuse de façon à favoriser le transport des contaminants à oxyder et/ou des produits d'oxydation de ces contaminants vers le catalyseur.

L'invention définit par ailleurs un indice de turbulence et une valeur minimale préférée de cet indice pour que le réacteur soit soumis à un régime d'écoulement de l'atmosphère gazeuse propre à augmenter la vitesse d'oxydation des contaminants et par conséquent à augmenter l'efficacité globale du procédé. Pour atteindre cette valeur minimale de l'indice de turbulence, l'invention prévoit par exemple qu'au moins un, de préférence au moins deux moyens d'obstruction (chacun étant ci-après également désigné sous le terme de "restriction") soient disposés à l'intérieur du réacteur, de préférence de manière orthogonale ou quasi-orthogonale (cette notion étant définie ci-après) à l'axe du réacteur. De préférence le régime turbulent est choisi, par exemple les moyens d'obstruction (restrictions) sont en nombre suffisant et de forme appropriée, pour procurer un ralentissement de 10% à 90% environ de l'atmosphère gazeuse, pendant le processus d'oxydation photocatalytique, par rapport à la vitesse qu'aurait ladite atmosphère gazeuse en l'absence du régime turbulent d'écoulement. Les moyens d'obstruction (restrictions) peuvent aussi avantageusement être revêtus de catalyseur.

De préférence le procédé selon l'invention est mis en oeuvre en maintenant l'atmosphère gazeuse dans l'enceinte close à une température ne dépassant pas 25°C, de préférence ne dépassant pas 18°C, et plus préférentiellement à une température choisie dans une gamme comprise entre 0° et 15°C. Cette température pourra utilement être ajustée en fonction de la nature précise du fruit ou légume contenu dans l'enceinte et du stade désiré (stockage, transport ou mûrissement délibéré) d'évolution de ce fruit ou légume.

De façon avantageuse par rapport à l'art antérieur, le procédé selon l'invention peut être mis en oeuvre en maintenant l'atmosphère gazeuse dans l'enceinte close à une température supérieure de 0,5°C à 5°C à la température qui serait nécessaire pour obtenir la même vitesse de mûrissement d'un même fruit ou légume en l'absence dudit processus d'oxydation photocatalytique selon régime turbulent d'écoulement. Cette différence de température permet de calculer l'économie de réfrigération accessible, toutes les autres conditions opératoires (notamment le stade final d'évolution du fruit ou légume) étant égales par ailleurs.

De façon avantageuse par rapport à l'art antérieur, le procédé selon l'invention peut être mis en oeuvre sous des pressions variables (de préférence la pression atmosphérique) et/ou dans une atmosphère gazeuse de composition variable en oxygène. Cette atmosphère peut consister en de l'air à teneur standard en oxygène (environ 21 % en volume) ou bien en de l'air appauvri en oxygène, par exemple avec une teneur en oxygène de 1 % à 18%, de préférence 2% à 10%, en volume. Ce dernier mode de réalisation de l'invention peut être particulièrement avantageux lorsque l'enceinte close est un moyen de transport frigorifique (tel que caisson, camion ou wagon) déjà équipé d'une installation de purge par laquelle l'oxygène de l'air est partiellement remplacé par un gaz inerte tel que de l'azote.

De préférence, le régime turbulent d'écoulement de l'atmosphère gazeuse à traiter est caractérisé par un indice de turbulence, pouvant être calculé selon la formule I_{T} = Re* N / β f , dans laquelle :
- Re* est un nombre exprimé par Re* = (4 ρ Vₘ S) / (P ν),
- β = s / S est un paramètre de porosité dont la valeur est égale à 1 si aucun moyen d'obstruction n'est présent à l'intérieur du réacteur,
- f est un facteur de friction correspondant au rapport de toutes les surfaces présentes dans le réacteur à la surface développée par le réacteur en l'absence de moyen d'obstruction, égal à Σ surfaces internes développées par le réacteur / surface d'un cylindre de périmètre P,
- S est la surface moyenne de la section orthogonale interne du réacteur en l'absence de moyen d'obstruction,
- ρ est la masse volumique de l'atmosphère gazeuse à traiter,
- Vₘ est la vitesse moyenne de l'atmosphère gazeuse à traiter parallèlement à l'axe longitudinal du réacteur,
- P est la somme du périmètre interne moyen du réacteur et du périmètre externe moyen de la plus petite enveloppe géométrique comprenant la (les) source(s) de rayonnement, lorsque celle(s)-ci est (sont) disposée(s) à l'intérieur du réacteur,
- ν est la viscosité dynamique de l'atmosphère gazeuse à traiter,
- N est le nombre de moyens d'obstruction dans le réacteur ou bien, en l'absence de moyen d'obstruction, est égal à 1, et
- s est la surface moyenne de l'ouverture définie par la section orthogonale interne du réacteur au maximum des moyens d'obstruction,
au moins égal à 2.000, de préférence supérieur à 50.000, et plus particulièrement supérieur à 1.000.000.

De préférence pour la mise en oeuvre du procédé selon la présente invention, la source de rayonnement ultraviolet ou visible est disposée à l'intérieur du réacteur. Toutefois l'invention n'est pas limitée à ce mode de réalisation et inclut aussi la possibilité de placer la source de rayonnement ultraviolet ou visible à l'extérieur du réacteur, à condition toutefois que la matière constituant ledit réacteur soit alors transparente audit rayonnement. Un nombre d'environ 2 à 20 moyens d'obstruction est habituellement suffisant pour obtenir le régime turbulent d'écoulement désiré. Un seul élément de support peut toutefois s'avérer suffisant, notamment lorsqu'une dimension longitudinale du réacteur n'est pas plus grande qu'une dimension transversale dudit réacteur.

La forme, la matière et les dimensions des moyens d'obstruction, en ce compris les éléments de support, peuvent être choisis dans de vastes gammes, pour autant qu'ils soient disposés de manière à assurer un écoulement turbulent de l'atmosphère gazeuse à traiter propre à favoriser le transport des contaminants à oxyder et/ou des produits d'oxydation de ces contaminants vers le catalyseur, de préférence un écoulement turbulent caractérisé par l'indice de turbulence I_{T} mentionné précédemment. De préférence, les moyens d'obstruction sont disposés perpendiculairement ou quasi-perpendiculairement à la direction d'écoulement de l'atmosphère gazeuse à traiter, telle que définie par exemple (dans le cas d'une entrée et d'une sortie disposées aux extrémités opposées du réacteur) par l'axe reliant l'entrée du gaz à traiter et la sortie du gaz traité. Par quasi-perpendiculairement au sens de la présente invention, on entend que le plan moyen (par exemple le plan de symétrie) dans lequel s'inscrit le moyen d'obstruction fait avec la direction d'écoulement de l'effluent gazeux à traiter un angle compris entre 60° et 120°, de préférence compris entre 70° et 110° environ, et encore de préférence compris entre 80° et 100° environ. Par exemple le moyen d'obstruction peut être une structure plane et mince, c'est-à-dire de faible épaisseur par rapport à la dimension longitudinale du réacteur, le cas échéant centrée sur l'axe du réacteur ou l'axe de la source de rayonnement. Cette forme peut être un disque, une ellipse, un polygone ou toute autre forme géométrique appropriée à un bon contact avec les contaminants à oxyder et aisée à fabriquer de manière peu onéreuse.

Selon un mode avantageux de réalisation de la présente invention, la source de rayonnement ultraviolet ou visible est placée selon l'axe longitudinal du réacteur et chaque moyen d'obstruction est de préférence percé d'un trou (de forme adaptée à celle de la source), par exemple en son centre, de manière à être disposé autour de la source mais perpendiculairement ou quasi-perpendiculairement à l'axe du réacteur.

La nature du matériau constituant les moyens d'obstruction n'est pas critique. Tout matériau de résistance connue pour pouvoir supporter durablement l'effet d'un rayonnement ultraviolet ou visible, la turbulence de l'atmosphère gazeuse et, lorsque le moyen d'obstruction est un élément de support, un catalyseur de photo-oxydation peut être utilisé dans le contexte de la présente invention. A titre d'exemples on peut citer le verre et les métaux, de préférence ceux offrant une réflexion satisfaisante du rayonnement lumineux tels que l'aluminium ou l'acier inoxydable. L'élément de support peut comporter une surface ou structure poreuse, telle qu'une grille ou un tamis métallique, apte à recevoir le dépôt d'un catalyseur de photo-oxydation.

La source de rayonnement ultraviolet ou visible utilisée selon l'invention est de préférence une source de rayonnement courante du commerce. S'agissant de source à rayonnement ultraviolet, elle étale généralement son rayonnement dans une gamme de longueurs d'ondes inférieures à 400 nm environ. S'agissant de source à rayonnement visible, elle étale généralement son rayonnement dans une gamme de longueurs d'ondes de 400 à 700 nm environ. Le type de construction (notamment la matière et la géométrie) et le mode de fonctionnement (notamment le gaz émetteur) de la source ne sont pas critiques. Comme exemples de sources à rayonnement ultraviolet, on peut citer notamment des sources à basse pression comprenant un gaz de mercure, néon, argon, krypton ou xenon ou leurs mélanges, comme il est bien connu de l'homme de l'art. L'enveloppe de la source peut, de manière conventionnelle, être constituée d'un tube de céramique, de verre ordinaire (quartz fondu ou silice) ou de verre à solarisation réduite (selon la technologie de source à longue durée développée par la société Philips) et le cas échéant être revêtue de phosphore. La puissance nominale de la source, c'est-à-dire sa puissance consommée, n'est pas critique et peut varier de 2 à 500 watts environ. En raison de l'efficacité exceptionnelle assurée par la turbulence, il n'est pas nécessaire d'avoir recours à des sources de forte puissance et il est suffisant que la source procure une intensité lumineuse moyenne sur le photocatalyseur, c'est-à-dire une puissance par unité de surface de photocatalyseur illuminé, d'environ 1 à 20 mW/cm², de préférence 2 à 10 mW/cm². Cette intensité lumineuse peut être mesurée par tout moyen approprié tel qu'un spectrophotomètre fonctionnant dans une gamme de longueur d'ondes de 200 à 400 nm environ pour le rayonnement ultraviolet. La source de rayonnement ultraviolet ou visible peut également être une source de lumière naturelle, éclairante de l'extérieur du réacteur ou bien par le moyen de guides d'ondes avec formation éventuelle de convection thermique.

Le réacteur utilisé pour la mise en oeuvre du procédé selon l'invention peut comprendre ou être fonctionnellement associé à des moyens propres à amplifier l'écoulement turbulent de l'atmosphère gazeuse à traiter dans le réacteur, comme par exemple des moyens de ventilation forcée ou des moyens de convection thermique. De préférence, lesdits moyens d'amplification de la turbulence sont placés à proximité de l'entrée du réacteur pour une meilleure efficacité. Par " fonctionnellement associé à ", on entend que ces moyens ne sont pas nécessairement liés au réacteur par un moyen physique de liaison tel que tige ou autre système d'accrochage mais, par leur positionnement par rapport au réacteur, agissent en synergie avec les moyens d'obstruction pour augmenter l'indice de turbulence (tel que défini plus haut) ou le caractère turbulent du régime d'écoulement dans le réacteur. De préférence lesdits moyens d'amplification de la turbulence permettent d'assurer, seuls ou en combinaison avec les autres éléments présents dans le réacteur, à savoir les éléments de support et éventuellement les restrictions, une vitesse linéaire moyenne du gaz comprise entre 0,1 et 3 m/s environ. De façon conventionnelle, cette vitesse peut être mesurée au moyen de tout dispositif approprié bien connu de l'homme de l'art, tel qu'un anémomètre, placé par exemple à proximité de la sortie du réacteur.

La technique utilisée pour déposer le catalyseur de photooxydation sur l'élément de support n'est pas critique. Toute méthode connue pour procurer un dépôt durable et, de préférence, d'épaisseur sensiblement homogène peut être utilisée dans le contexte de la présente invention. Des exemples non limitatifs de telles méthodes sont bien connus de l'homme de l'art et incluent le dépôt chimique en phase vapeur, le revêtement par centrifugation (aussi connu sous le terme de " spin coating ") et le trempage du support ( " dip coating ") dans une suspension catalytique dans un solvant organique suivi d'une étape de séchage à une température n'induisant pas une modification de la forme cristalline du catalyseur (par exemple entre 10°C et 240°C), la durée du séchage étant fonction inverse de la température de séchage. Dans la méthode de trempage, le cycle de trempage et séchage peut être répété autant que nécessaire pour obtenir la masse de catalyseur désirée par unité de surface, typiquement entre 0,5 et 15 g/m² environ. La méthode de dépôt la plus appropriée sera choisie en fonction notamment de l'épaisseur de la couche de catalyseur désirée, celle-ci étant habituellement comprise entre 1 et 5 µm environ.

Un perfectionnement optionnel de la présente invention consiste à formuler le photocatalyseur au moyen de liants minéraux (tels que la silice colloidale) ou organiques (tels que des silicates d'alkyle partiellement hydrolysés) afin de réaliser une sorte de frittage et par conséquent de prévenir l'arrachement des particules de catalyseur pendant le processus de traitement de l'atmosphère gazeuse sous régime turbulent.

La nature du catalyseur de photo-oxydation déposé sur l'élément de support utilisé dans le procédé selon l'invention n'est pas critique. Tout catalyseur de type semi-conducteur connu pour oxyder, sous l'effet d'un rayonnement ultraviolet ou visible, des contaminants tels que l'éthylène présents à l'état de traces dans un gaz peut être utilisé pour la présente invention. A titre d'exemples on peut citer les dioxydes de titane, de silicium, d'étain et de zirconium, l'oxyde de zinc, les trioxydes de tungstène et de molybdène, l'oxyde de vanadium, le carbure de silicium, les sulfures de zinc et de cadmium, le séléniure de cadmium, leurs mélanges en toutes proportions et leurs solutions solides. Ces catalyseurs peuvent en outre être dopés par l'addition de faibles proportions (c'est-à-dire jusqu'à 10% environ en poids) d'autres métaux ou de composés d'autres métaux tels que des métaux précieux, en particulier le platine, l'or et le palladium, ou des terres rares (tels que le niobium et le ruthénium). Le cas échéant, le catalyseur de photooxydation peut être déposé sur un support tel qu'une zéolithe, par exemple la mordénite. Dans le cas de l'oxyde de titane, le catalyseur peut aussi être préparé, selon les techniques bien connues de l'homme de l'art, sous forme d'aérogel ayant une surface spécifique élevée. En raison de l'efficacité exceptionnelle du procédé selon l'invention, il n'est toutefois pas nécessaire d'avoir recours à des catalyseurs de fabrication complexe et :ou de prix de revient élevé, et le dioxyde de titane dans sa forme cristalline anatase convient généralement bien.

Avantageusement, le procédé selon l'invention peut en outre prévoir une étape de filtrage de particules solides présentes dans l'atmosphère gazeuse à traiter, par exemple de particules de poussières de taille ne dépassant pas 0,5 µm environ, afin d'éviter ou retarder l'encrassement du réacteur et la désactivation du catalyseur qui peut en résulter. Ceci peut être réalisé concrètement en disposant, à l'entrée du réacteur de photo-oxydation catalytique, un filtre tel que ceux de la catégorie HEPA disponible auprès de la société Honeywell.

Avantageusement encore, le procédé selon l'invention peut en outre prévoir une étape de captation de l'excédent de dioxyde de carbone produit pendant la respiration des produits agricoles et/ou l'oxydation de l'éthylène. Ceci peut être réalisé concrètement en disposant, dans l'enceinte close contenant les produits agricoles, un ou plusieurs réservoirs contenant un solide fortement réactif avec le dioxyde de carbone, tel que de la chaux.

Le procédé selon l'invention est très largement applicable à une vaste gamme de produits agricoles concernés par la maturation par l'éthylène, en particulier les fleurs, les plantes, les légumes et de très nombreux fruits tels que pommes, poires, bananes, avocats, raisins, kiwis, fraises, prunes, nectarines, pêches, figues, litchis, mangues, ananas, oranges, pamplemousses, etc. En fonction du type de fruit et du stade d'avancement du fruit dans la chaîne de distribution du récoltant au consommateur final, la température d'exécution du procédé selon l'invention et la teneur en oxygène dans l'atmosphère gazeuse à traiter pourront être modulées, par exemple par référence aux conditions recommandées publiées par le site internet http:/ /postharvest.ucdavis.edu.

Le procédé selon l'invention présente de nombreux avantages, tels que :
- la possibilité d'éliminer au moins 90% de l'éthylène présent dans une enceinte close contenant des produits agricoles à une vitesse industriellement applicable, de l'ordre de 0,1 à 1,5 µmole par heure, par watt de puissance de la source et par unité (gramme par mètre carré) de densité surfacique du catalyseur, même lorsque la concentration initiale en éthylène est très faible (de l'ordre de 5 à 50 ppm en volume),
- en conséquence de l'élimination rapide de l'éthylène formé par la maturation ou le développement des produits agricoles, la préservation de leur fraîcheur (fleurs et plantes) ou de leurs propriétés organoleptiques (fruits et légumes),
- une moindre consommation d'énérgie, à qualité constante, pendant le transport ou le stockage frigorifique de produits agricoles.

Un autre avantage du procédé selon l'invention réside dans l'emploi de réacteurs photocatalytiques de dimensions et de poids bien plus faibles que ceux des réacteurs opérés en l'absence de régime turbulent d'écoulement, et dont le volume ne vient donc pas en diminution du volume disponible pour le stockage des produits agricoles dans l'enceinte close.

Selon un autre aspect, la présente invention concerne un dispositif pour la préservation de la qualité de produits agricoles maintenus dans une atmosphère gazeuse, comprenant :
- une enceinte close contenant ladite atmosphère gazeuse,
- un système d'extraction et/ou refroidissement de ladite atmosphère gazeuse,
- au moins une source de rayonnement ultraviolet ou visible placée dans l'enceinte close,
- un réacteur placé à l'intérieur de l'enceinte close et comprenant (a) une entrée, (b) une sortie, (c) au moins deux moyens d'obstruction obstruant partiellement l'écoulement de l'atmosphère gazeuse dans le réacteur et générant une zone de gaz turbulent et/dont (d) au moins un élément de support revêtu d'un catalyseur formant une surface catalytique exposée capable d'oxyder au moins partiellement, sous l'action du rayonnement ultraviolet ou visible délivré par la source, un ou plusieurs contaminants accélérant le développement des produits agricoles, ladite surface catalytique étant disposée dans la zone de gaz turbulent de façon à ce que l'écoulement du gaz turbulent soit incident sur ladite surface catalytique, et
- un moyen placé dans l'enceinte close pour forcer l'atmosphère gazeuse provenant du système d'extraction et/ou refroidissement à passer vers l'entrée (a) du réacteur.

Ledit moyen pour forcer l'atmosphère gazeuse peut consister par exemple en une gorge ou goulotte. De manière préférée, le dispositif selon l'invention peut comprendre en outre un filtre placé à l'entrée du réacteur pour filtrer les poussières ou particules qui pourraient être en suspension dans l'atmosphère gazeuse. De manière encore préférée, le dispositif selon l'invention peut comprendre en outre des moyens propres à amplifier l'écoulement turbulent de l'atmosphère gazeuse, tels que par exemple un ventilateur placé à la sortie du réacteur.

Le dispositif selon l'invention présente l'avantage de combiner en un seul appareillage l'extraction/pulsion/refroidissement et le traitement photo-catalytique de décontamination de l'atmosphère gazeuse contenant les produits agricoles à préserver.

La présente invention est maintenant illustrée par les exemples non limitatifs suivants.

### EXEMPLE 1

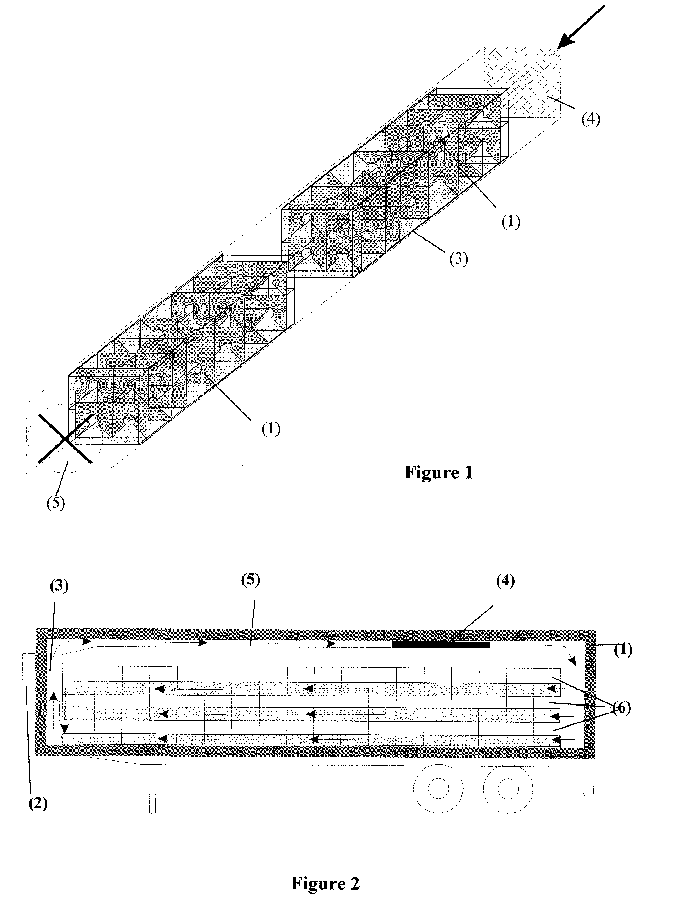

La cinétique de la dégradation de l'éthylène par oxydation à 20°C et sous pression atmosphérique normale a été étudiée dans une enceinte close de volume 950 I en utilisant le réacteur photocatalytique représenté sur la figure 1. Ce réacteur comprend deux séries de 4 modules photocatalytiques (chacun conforme à la représentation de la figure 10A de la demande de brevet WO 02/47799) insérés dans un tube parallélépipédique (3) et, en outre, comprend un filtre (4) - de type HEPA disponible auprès de Honeywell - à l'entrée et d'un ventilateur (5) à la sortie. Chaque module photocatalytique comporte 16 restrictions (1) (dont une partie seulement est représentée sur la figure 1), chacune faisant avec la restriction adjacente un angle de rotation de 90 degrés, et est muni d'une lampe UV-A de puissance 15 watts (non représentée sur la figure 1) de type Cleo disponible auprès de la société PHILIPS. Chaque restriction (1) occupe les trois-quarts de la section transversale du réacteur et laisse passer la lampe en son centre. Toutes les surfaces internes - paroi (3) et restrictions (1 ) - du réacteur ont été recouvertes par spray de 4,0 g de dioxyde de titane (disponible commercialement sous la référence P25 auprès de la société Degussa, et comprenant environ 20% de rutile et 80% de forme anatase) pour une surface catalytique totale de 1 m², les dimensions de chaque module étant de 5 x 5 x 26 cm. On peut calculer, selon la formule indiquée précédemment, que l'indice de turbulence à travers chaque module du réacteur est de 9.000.000. Par ailleurs, l'intensité lumineuse moyenne capable d'être reçue par le photocatalyseur, mesurée au moyen d'un spectrophotomètre Solascop 2000 (muni d'un diffuseur Cosin) commercialisé par la société SOLATELL, est de 4 mW/cm².

De l'éthylène est injecté dans l'enceinte close au moyen d'une seringue jusqu'à ce que la concentration en éthylène dans l'enceinte atteigne 9,2 ppm en volume. Le réacteur photo-catalytique est alors activé au moyen des 8 lampes UV-A et la concentration en éthylène mesurée dans l'enceinte close par chromatographie gazeuse (au moyen d'un microchromatographe gazeux Quadh de la société AGILENT) et enregistrée. La concentration résiduelle en éthylène est de 1,0 ppm en volume après 150 minutes d'irradiation, et de seulement 0,25 ppm en volume après 180 minutes d'irradiation. A partir de ces données, on peut calculer que la vitesse d'oxydation de 90% de l'éthylène présent à l'origine est de 0,31 µmole/heure/watt/g.m² de catalyseur (µmole par heure par watt de puissance de la source et par unité (gramme par mètre carré) de densité surfacique de catalyseur).

### EXEMPLE 2 - Remorque frigorifique équipée d'un dispositif de préservation de fruits.

La figure 2 représente schématiquement une vue d'une remorque frigorifique (1) dans laquelle la circulation de l'air ou de l'air appauvri en oxygène réfrigéré est obtenue au moyen d'un système de refroidissement (2) couplé à un ventilateur (3). L'air ou l'air appauvri en oxygène réfrigéré est ensuite, au moyen d'une goulotte (5), forcé à se déplacer en direction d'un réacteur photocatalytique (4) qui par exemple peut être du type représenté sur la figure 1. La remorque est en outre équipée d'une série d'étagères (6) sur lesquelles des fruits ou légumes peuvent être délicatement entreposés. De l'espace entre deux étagères adjacentes (6) est laissé libre pour la circulation de l'air ou de l'air appauvri en oxygène réfrigéré (la direction de circulation étant représentée au moyen de flèches).

### EXEMPLE 3 - préservation de fruits au moyen d'un réacteur photocatalytique sous écoulement turbulent.

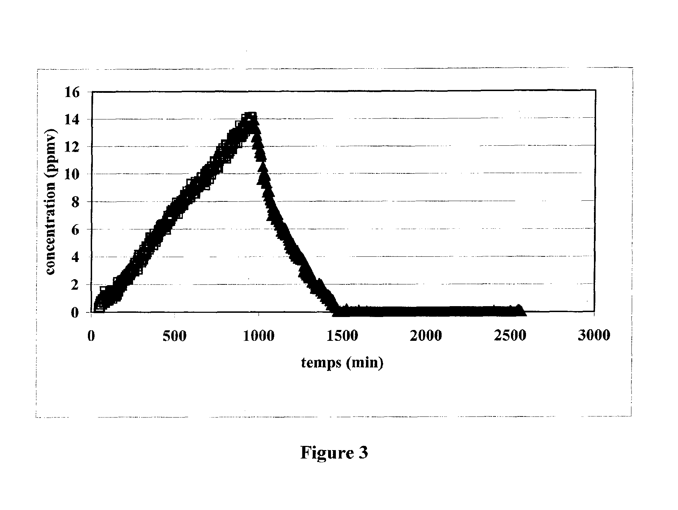

A 28,5°C et sous pression atmosphérique, 9 kg de pommes Granny Smith sont placés dans des casiers à l'intérieur de l'enceinte close de l'exemple 1 équipée du réacteur de la figure 1, c'est-à-dire en utilisant le même équipement qu'à l'exemple 1. La concentration en éthylène est mesurée en continu et enregistrée au moyen d'un microchromatographe gazeux Quadh de la société AGILENT, et est représentée sur la figure 3. Après 950 minutes d'entreposage des fruits dans ces conditions, la concentration en éthylène augmente jusqu'à 14,0 ppmv. A ce moment-là, le réacteur photocatalytique est activé au moyen des huit lampes UV-A. Comme représenté sur la figure 3, la concentration en éthylène est alors réduite jusqu'à :
- 1,4 ppmv seulement 400 minutes après l'activation du réacteur, et
- 0,25 ppmv seulement 600 minutes après l'activation du réacteur.

## Revendications

1. Procédé de préservation de la qualité de produits agricoles dans l'atmosphère gazeuse d'une enceinte close, comprenant un traitement de ladite atmosphère gazeuse, **caractérisé en ce que** ledit traitement consiste à soumettre ladite atmosphère gazeuse à un processus d'oxydation photocatalytique selon un régime turbulent d'écoulement.

2. Procédé selon la revendication 1, **caractérisé en ce que** ledit régime turbulent d'écoulement est défini par un indice de turbulence au moins égal à 2.000.

3. Procédé selon la revendication 1, **caractérisé en ce que** ladite atmosphère gazeuse contient un ou plusieurs contaminants accélérant le développement des produits agricoles et **en ce que** la teneur en ces contaminants dans l'atmosphère gazeuse est réduite par l'effet de l'oxydation photocatalytique sous régime turbulent.

4. Procédé selon la revendication 3, **caractérisé en ce que** l'un des contaminants est l'éthylène et **en ce que** sa teneur est réduite jusqu'à moins de 1 ppm, de préférence moins de 0,1 ppm, par l'effet de l'oxydation photocatalytique sous régime turbulent.

5. Procédé selon l'une des revendications 1 à 3, **caractérisé en ce que** ladite atmosphère gazeuse est forcée, en présence d'au moins une source de rayonnement ultraviolet ou visible, à passer selon un régime turbulent d'écoulement au contact d'un catalyseur capable d'oxyder un ou plusieurs contaminants contenus dans l'atmosphère gazeuse sous l'action dudit rayonnement ultraviolet ou visible.

6. Procédé selon la revendication 1, **caractérisé en ce que** ladite atmosphère gazeuse est forcée à passer au contact d'au moins un moyen d'obstruction placé dans ladite enceinte close et contribuant à générer le régime turbulent d'écoulement pour ladite atmosphère gazeuse.

7. Procédé selon la revendication 5, **caractérisé en ce que** ledit catalyseur est déposé sur un support placé dans ladite enceinte close, ledit support constituant de préférence un moyen d'obstruction contribuant à générer le régime turbulent d'écoulement pour ladite atmosphère gazeuse.

8. Procédé selon la revendication 7, **caractérisé en ce que** ledit support est fonctionnellement associé à, ou bien est inclus dans, un dispositif comprenant ou bien fonctionnellement associé à, des moyens propres à amplifier un écoulement turbulent de l'atmosphère gazeuse.

9. Procédé selon l'une des revendications 1 à 8, **caractérisé en ce qu'**il est mis en oeuvre en maintenant l'atmosphère gazeuse dans l'enceinte close à une température ne dépassant pas 25°C.

10. Procédé selon l'une des revendications 1 à 9, **caractérisé en ce qu'**il est mis en oeuvre en maintenant l'atmosphère gazeuse dans l'enceinte close à une température supérieure de 0,5°C à 5°C à la température qui serait nécessaire pour obtenir la même vitesse de mûrissement d'un même fruit ou légume en l'absence dudit processus d'oxydation photocatalytique selon régime turbulent d'écoulement.

11. Procédé selon l'une des revendications 1 à 10, **caractérisé en ce que** ladite atmosphère gazeuse est constituée d'air appauvri en oxygène dont la teneur en oxygène est comprise entre 1 % et 20% en volume.

12. Dispositif pour la préservation de la qualité de produits agricoles maintenus dans une atmosphère gazeuse, comprenant :
- une enceinte close contenant ladite atmosphère gazeuse,
- un système d'extraction/refroidissement de ladite atmosphère gazeuse,
- au moins une source de rayonnement ultraviolet ou visible,
- un réacteur placé à l'intérieur de l'enceinte close et comprenant (a) une entrée, (b) une sortie, (c) au moins deux moyens d'obstruction obstruant partiellement l'écoulement de l'atmosphère gazeuse dans le réacteur et générant une zone de gaz turbulent et/dont (d) au moins un élément de support revêtu d'un catalyseur formant une surface catalytique exposée capable d'oxyder au moins partiellement, sous l'action du rayonnement ultraviolet ou visible délivré par la source, un ou plusieurs contaminants accélérant le développement des produits agricoles, ladite surface catalytique étant disposée dans la zone de gaz turbulent de façon à ce que l'écoulement du gaz turbulent soit incident sur ladite surface catalytique, et
- un moyen pour forcer l'atmosphère gazeuse provenant du système d'extraction/refroidissement à passer vers l'entrée (a) du réacteur.
